# EUROPEAN PATENT APPLICATION

(11) **EP 4 756 557 A1**
(43) Date of publication of application: **10.06.2026**
(21) Application number: 24218191.5
(22) Date of filing: 06.12.2024
(51) Int. Cl.: G05D 1/48, G05D 1/628, G05D 1/689, B63G 8/00

(54) **DEVICES AND METHODS FOR ADAPTIVE SURVEYING OF A MARITIME AREA USING AN UNCREWED MARINE VEHICLE**

(71) Applicant: FNV IP B.V., 2264 SG Leidschendam (NL)
(72) Inventor: Lafontaine, Stijn Cornée, 2264 SG Leidschendam (NL); Hendrix, Julius Louis Anselmus Maria, 2264 SG Leidschendam (NL); Laporte, Jonathan René Janick, 2264 SG Leidschendam (NL); Dias Bispo Carvalho, Diego, 2264 SG Leidschendam (NL); Brekelmans, Christiaan Theodorus Wijnand, 2264 SG Leidschendam (NL)
(74) Representative: FNV Intellectual Property

(57) **Abstract**

The present invention relates to methods and devices for an uncrewed marine vehicle (UMV) for surveying a maritime area. The method comprises deploying the at least one UMV to the maritime area, navigating the at least one UMV in the maritime area while collecting a stream of survey data associated with a plurality of survey areas, processing the stream of collected survey data to generate data quality scores, wherein each data quality score is associated with at least one survey area, and upon determining that at least one of the data quality scores is lower than a predetermined quality threshold, adjusting the navigation of the UMV in view of the at least one of the low data quality score. Unlocking insights from Geo-Data, the present invention further relates to improvements in sustainability and environmental developments: together we create a safe and liveable world.

## Description

### FIELD OF THE INVENTION

The present disclosure generally relates to the field of uncrewed or unmanned marine vehicles (UMVs). Unlocking insights from Geo-Data, the present invention further relates to improvements in sustainability and environmental developments: together we create a safe and liveable world.

### BACKGROUND OF THE INVENTION

Examples of UMVs are uncrewed surface vessels (USVs) and remotely operated vehicles (ROVs). These vehicles are used for various maritime applications, including subsea geo-data surveying, environment monitoring, maritime facility and subsea infrastructure maintenance. USVs operate on the surface of a body of water, while ROVs may more typically be deployed for either water-surface or underwater operations, most typically underwater operations.

UMVs are configured to be operable without any human crew onboard. They may be remotely operated or controlled from a remote base station on land (e.g., a remote operating center), at sea or in the air; configured to operate autonomously, for example to autonomously navigate at sea on the surface and/or sub-sea; or operate under a combination of autonomous control and remote control. When operating autonomously, the UMVs may advantageously operate independently or with minimal (remote) human intervention.

One of the advantages of UMVs is their ability to operate in harsh and hazardous environments where a human presence is not ideal or not possible. This capability is particularly valuable for tasks such as deep-sea survey, environmental monitoring and underwater infrastructure inspection in extreme conditions. Furthermore, remote operations in marine environments are particularly advantageous because it reduces exposure of human staff to hazardous maritime surroundings. In addition, without staff on board, the size and weight of the vessel can be dramatically reduced, which leads to much more efficient operations, with reduced emissions. Remote operations thus increase safety and reduce environmental impact.

Enhancing the autonomy of UMVs may be desirable for several reasons. When human intervention is minimized, the autonomy can lead to increased productivity, reduced operational costs, and/or extended operation periods. Therefore, it is desirable to improve the ability of UMVs to operate autonomously. This may further reduce needs for base station intervention as remote control, and needs for base stations to remain in constant contact with UMVs, for example reducing needs for deployment and/or presence of mother vessels or aircraft for remote control, instruction or monitoring of UMVs.

A typical task for UMVs is inspection of subsea assets such as pipelines, cables, monopiles, and the sea floor. Traditional inspection methods often face challenges in data quality and coverage, leading to costly and time-consuming re-surveys. Factors such as data density, coverage area, data coverage, and environmental conditions can greatly affect the quality of the collected data.

When the quality of the data is compromised, it can result in incomplete or inaccurate inspections, necessitating additional surveys and increasing operational costs. This inefficiency not only impacts the overall productivity but also poses risks to the maintenance and management of subsea assets. Therefore, there is a need for a system which can enhance the efficiency of a surveying operation of a UMV for comprehensive and accurate data collection.

### BRIEF SUMMARY OF THE INVENTION

According to a first aspect of the invention a method for a UMV to navigate along a path in a maritime area for gathering survey data is provided. Maritime survey can relate to collecting survey data from survey areas such as underwater pipe inspection, scientific research, seabed mapping, environmental monitoring, maritime facility and subsea infrastructure, marine life surveys, and more. A survey area may be a subsea facility or a portion of it, a seabed area, a subsea 3D volume, a set of locations, or any area of interest for the survey operation. UMVs are particularly useful for these surveys due to their autonomy, which reduces the need for human intervention and increases efficiency. They can access hazardous or hard-to-reach areas, minimizing risks to human operators and divers, and are cost-effective as they reduce the need for human engagement.

Surveying involves acquiring data using sensors. A UMV can be for example a USV or an ROV. The types of data acquired during these surveys may include sonar data, visual data, environmental data such as water temperature, salinity, chemical composition, geophysical data such as magnetic, gravitational, and, acoustic, and seismic data. Each data would have data properties that are important. The relevant data properties can be specific to the purpose and situation of a survey. The relevant data properties may include resolution, sensor sensitivity, field of view, signal-to-noise ratio, brightness, contrast, data density, data coverage, signal strength, and more. Depending on a survey project's purpose, a quality threshold can be set for any relevant data property to identify which data is more useful than another.

The UMV may navigate along a path in a maritime area for gathering the survey data. The maritime area may include one or more survey areas, to which the UMV is sent conduct the survey by collecting data. During the survey operation, the UMV may obtain a stream of survey data. The stream of survey data may be collected with timestamps or any other label which can be used to derive the associated survey area or location and/or time related to the collection of the specific data.

In embodiments, the survey data is evaluated in view of relevant data properties and given a quality score, such quality score can indicate the data quality associated with the surveyed (or still being surveyed) survey area at a certain location and/or time. In embodiments, the data quality score is associated directly or indirectly to a certain survey area, or a location within the survey area. When the data quality score does not meet the expectation (if quantified as scores, lower than a quality threshold), it means that the corresponding survey data might not be useful, possibly even require a re-survey, which can be costly.

In the first aspect, the invention provides a method for navigating at least one UMV to survey a maritime area. The method comprises the steps of deploying the at least one UMV to the maritime area, navigating the at least one UMV in the maritime area while collecting a stream of survey data associated with a plurality of survey areas, processing the stream of collected survey data to generate data quality scores.

According to embodiments of the method, upon determining that at least one of the data quality scores is lower than a predetermined quality threshold, at least one survey characteristic is changed. A survey characteristic is any of the settings of the sensors collecting the data, but can also relate to the positioning and navigating of the UMV. As a result of on-the-fly determining the quality score, a relevant or related survey characteristic can be adapted. The changed survey characteristic will influence the subsequent collecting of the survey data and preferably results in increasing the quality data level of the collected survey data.

In an embodiment the data quality score can be associated with at least one survey area. This allows determining for which survey area the data quality score is below a threshold. This allows adjusting the survey characteristic in relation to the survey area.

In embodiments, the adjusting of a survey characteristic includes adjusting the navigating of the UMV in view of the at least one determined low data quality score, which is the data quality score that is lowered than the threshold. This method enhances the accuracy and reliability of maritime surveys by dynamically adjusting the navigation of the UMV based on instantaneous data quality assessments. By ensuring that survey data meets predetermined quality thresholds, the method improves the overall quality and usefulness of the collected data.

In embodiments, the method may further comprise collecting additional survey data of the survey area associated with the survey data that has the determined quality score below the threshold. After adjusting the navigating of the UMV, additional survey data can be collected. With the additional collected survey data, the at least one data quality score based of that survey area can be updated by including the additional survey data to the original survey data associated with that survey area. This ensures that the UMV checks the data quality score after adjusting the navigation path such that the data quality is monitored properly.

In embodiments of the method, the at least one UMV is set to navigate in the maritime area along a set navigation trajectory. This trajectory can be preprogammed based on the one or more survey areas to visit. In the methods of the invention, the low data quality score is determined, the UMV deviate from the set navigation trajectory and proceeds to according to an adjusted trajectory.

In embodiments, the adjusting the navigation of the UMV in view of the determined low data quality results in revisiting the survey area associated with the determined low data quality. After moving on from a survey area, and particularly after completing the data collection of that survey area, the UVM continues to navigate to a next survey area. While at the next survey area, the data quality level of data associated with the previous survey area is found to be too low and the UVM adjusts to navigate back to the previous survey area.

In embodiments, the method provides a plurality of locations within the maritime area for data collection. The locations are associated with the survey areas. In embodiments, a survey path within the maritime area for navigation of the at least one UMV along the plurality of locations is determined. Then, method can include navigating the at least one UMV along the determined survey path.

In embodiments, the stream of survey data associated with the plurality of locations along the navigation trajectory.

In embodiments, the method may further comprise revisiting at least one survey area associated with a data quality score that is lower than a second predetermined quality threshold, which is lower than the predetermined quality threshold, and collecting additional survey data from the at least one survey area associated with the data quality score that is lower than the second predetermined quality threshold. The two predetermined quality thresholds may be set to indicate different levels of data quality. For example, if a data quality core measured at a time is lower than the (first) predetermined quality threshold, but still higher than the second predetermined quality threshold, it may indicate that the corresponding survey data is useful but not optimal. In this situation, an adjustment to the navigation path to obtain a data quality score higher than the (first) predetermined quality threshold is sufficient as a measure to ensure the overall data quality of the survey. In this case a re-visit, and re-collection of data might not be necessary. On the other hand, if the data quality score is lower than an even lower threshold, the second data quality threshold, the corresponding survey data might not be useful and require a re-visit eventually. Since such quality is monitored during the survey, this embodiment ensures the completeness of survey, during the survey, by revisiting the survey area, from which low quality, not very useful data was collected. This provides a more granular approach to data quality management, ensuring that areas with significantly low data quality are prioritized for revisits.

In embodiments, the generating of the data quality scores may be performed after collecting data from the plurality of survey areas. This embodiment is useful for types of survey where an overview of the data quality is more relevant than an instantaneous data quality.

In embodiments, the deploying may comprise deploying a USV. In embodiments, the deploying may comprise deploying an ROV, wherein the ROV is connected to a surface vessel. The ROV may be deployed from a USV or a crewed surface vessel.

In embodiments, the method may further comprise navigating the surface vessel in view of the navigation of the ROV. This ensures coordinated navigation between the surface vessel and the ROV during the survey.

In embodiments, the processing may further comprise generating the data quality scores using an algorithm having input parameters including at least one of: resolution, sensor sensitivity, field of view, signal-to-noise ratio, data density, data coverage, survey location, signal strength, or sensor performance. This allows for a comprehensive assessment of data quality based on multiple factors.

In embodiments, the adjusting may comprise adjusting the navigation further in view of the current navigational environment. This ensures that navigation adjustments are made based on real-time environmental conditions.

In embodiments, the method may further comprise taking over the navigation of the at least one UMV by a human operator from a land-based station or from any other remote location, and/or receiving a navigation path from a human operator from a land-based station or from any other remote location, and/or receiving at least one corrected data quality score. This allows for human intervention and control in critical situations, enhancing the flexibility and adaptability of the survey.

In embodiments, the method may further comprise updating the predetermined quality threshold in view of the current navigational environment. This ensures that quality thresholds are dynamically adjusted based on real-time navigation conditions.

In the second aspect, the invention provides a UMV system for surveying a maritime area. The UMV system comprises at least one UMV, a memory, a processor, at least one survey sensor coupled to the at least one UMV, configured to collect a stream of survey data associated with a plurality of survey areas, a data scoring unit configured to process the stream of collected survey data to generate data quality scores. The data quality score is associated with at least one survey area.

The UMV system can also have a navigation unit for navigating the at least one UMV in the maritime area, wherein the navigation unit is configured to, upon determining that the data quality score is lower than a predetermined quality threshold, adjust a navigation path of the UMV in view of the determined low data quality score. This system enhances the accuracy and reliability of maritime surveys by dynamically adjusting the navigation of the UMV based on instantaneous data quality assessments. By ensuring that survey data meets predetermined quality thresholds, the system improves the overall quality and usefulness of the collected data.

In embodiments of the second aspect, the control unit and/or navigation unit of the UMV can be configured to perform any of the method steps disclosed herein.

In embodiments, the navigation unit may be further configured to navigate the at least one UMV to revisit at least one survey area associated with a data quality score that is lower than a second predetermined quality threshold, which is lower than the predetermined quality threshold. This provides a more granular approach to data quality management, ensuring that areas with significantly low data quality are prioritized for revisits.

In embodiments, the at least one UMV may be an assembly of a USV and an ROV. This configuration is particularly useful for a survey project requiring simultaneous survey operations from the USV and the ROV.

In embodiments, the UMV system may further comprise a wireless communication means configured to receive a navigation path and/or at least one corrected data quality score. This allows for remote control and intervention, enhancing the flexibility and adaptability of the system.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are therefore not to be considered to be limiting of its scope, the principles herein are described and explained with additional specificity and detail through the use of the accompanying drawings in which:
FIG. 1A in a schematic view of a ROV deployed underwater from a surface vessel (can be crewed or uncrewed) for surveying a seabed.
FIG. 1B is a schematic view of a USV surveying a seabed.
FIG. 2 is a flow chart of a method for navigating at least one UMV to survey a maritime area.
FIG. 3 is a schematic view of an ROV adaptively navigating along a seabed.

### DESCRIPTION OF ILLUSTRATIVE EMBODIMENTS

The following is a description of certain embodiments of the invention, given by way of example only and with reference to the drawings.

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. A reference to an embodiment in the present disclosure can be a reference to the same embodiment or any other embodiment. Such references thus relate to at least one of the embodiments herein.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

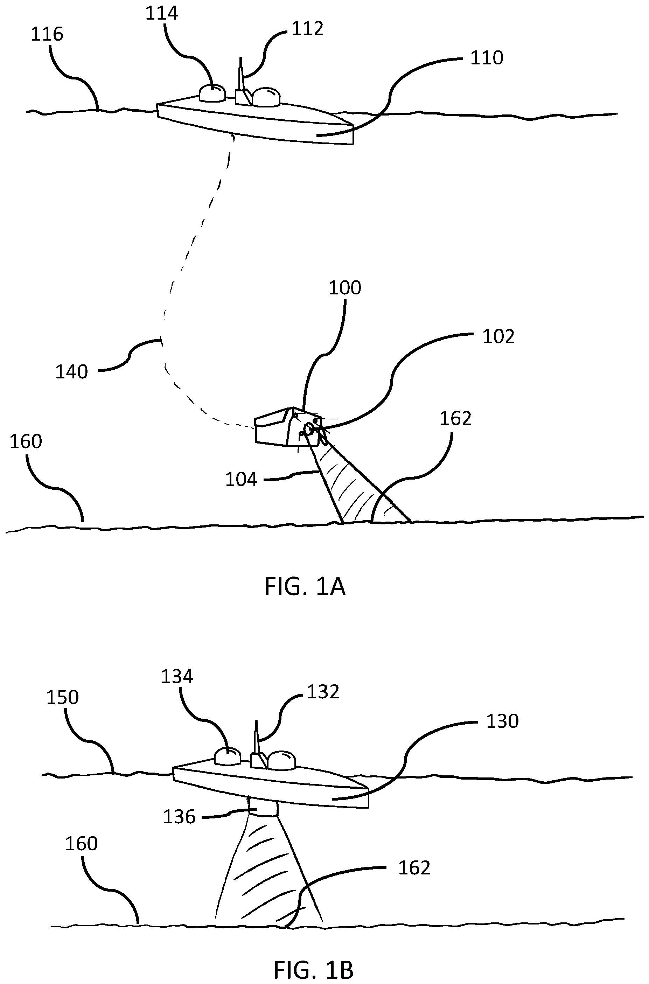

FIG. 1A shows an example of a survey UMV which is a ROV 100 deployed underwater, surveying a seabed 160, which can be the ocean floor. The ROV 100 is connected to a surface vessel 110 at the sea surface 116 via an umbilical 140. The surface vessel 110 can be uncrewed or crewed. The surface vessel 110 may comprise sensors 114 and a communication means 112.

The ROV 100 may be in data communication and/or power communication with the surface vessel 110. In the example shown in FIG. 1A, the ROV 100 is instructed to scan the surface of the seabed 160 to obtain surface data of the seabed 160. During the survey, the ROV 100 navigates near the seabed 160 and obtains surface data using a suitable sensor for mapping a sea floor, for example a sonar sensor. The sea floor is the survey area or part of a plurality of survey areas for which survey data is to be collected.

FIG. 1A shows a moment in which the ROV 100 is using a sensor 102 obtaining surface data of an area 162. The field of view 104 of the sensor is shown. As the ROV 100 navigates along the seabed 160, the ROV 100 periodically obtains surface data as survey data associated with the seabed.

FIG. 1B shows another example of a survey UMV which is a USV 130 navigating at the sea surface 150. The USV 130 may comprise surface sensors 134 and a communication means 132. For surveying a seabed 160, the USV 130 may include a sensor 136 at the hull for obtaining surface data of the seabed. In FIG. 1B the USV 130 is acquiring surface data of an area 162.

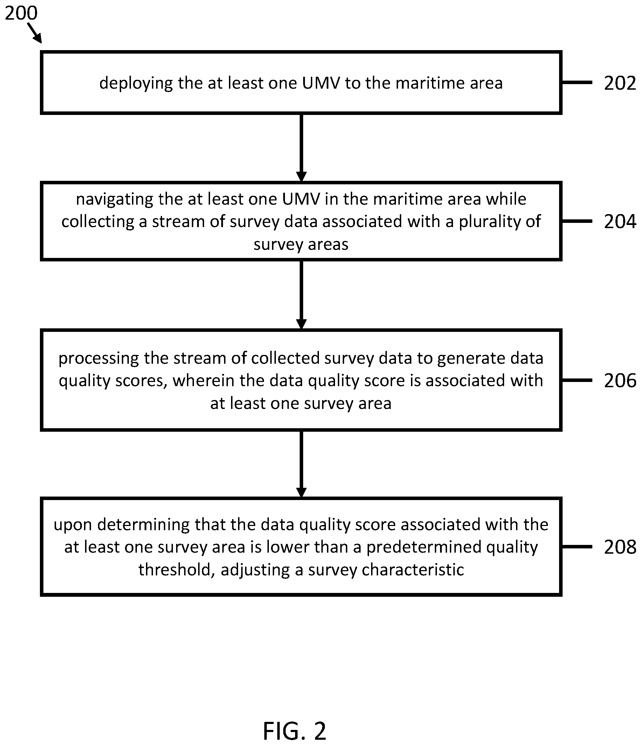

FIG. 2 shows a flow chart of a method 200 for navigating at least one UMV to survey a maritime area. Step 202 relates to deploying the at least one UMV to the maritime area. The UMV can be a USV as shown in FIG. 1B, or a ROV as shown in FIG. 1A deployed from a crewed or uncrewed surface vessel. The maritime area may be any area containing target survey area which can be a 2D area, a 3D volume, or any artificial facility.

Step 204 relates to navigating the at least one UMV in the maritime area while collecting a stream of survey data associated with a plurality of survey areas. The stream of survey data can be labeled with timestamps, location stamps, or any other labels for identifying the survey area associated with the collected data. The stream of survey data can also include the device/sensor status information.

Step 206 relates to processing the stream of collected survey data to generate data quality scores. The data quality score is associated with at least one survey area. Preferably the data quality score is a score that takes into account multiple pieces of survey data associated with one survey area. This allows obtaining a quality score relating to the total survey data collected in relation to a survey area. In an embodiment, the quality score of a survey area is determined only after completing the survey of a survey area.

Step 206 encompasses embodiments relating to evaluating the collected survey data and assessing the quality on-the-fly. The calculation of the data quality score can be based on data properties for example resolution, sensor sensitivity, field of view, signal-to-noise ratio, brightness, contrast, data density, data coverage, signal strength, and more. In the embodiment shown in FIG. 1A, the processing can be done locally in the ROV 100, or in the surface vessel 110, or even in a remote location such as a control center or in another vessel. The location of the processing can be anywhere suitable for the processing. Similarly, in the embodiment of FIG. 1B, the calculation can be done by the USV 130, or anywhere else.

The processing step 206 generates data quality scores associated with at least one survey area. How often the data quality scores are generated during surveying is a design choice. For example, if the ROV 100 shown in FIG. 1A is scanning the seabed and recording a video (a series of images), for example at a frame rate of 24 frames per second (fps), generation of a data quality score can be carried out for every 24 frames, in other words, every one second. The data quality score can be calculated from one single frame for every 24 frames, or, it can also be calculated from an aggregation of all 24 frames. How often exactly the data quality score is calculated is also a design choice. One can tailor the procedure to his/her needs. In this video example, the frames can have timestamps which allows the ROV to trace at which moment a bad image was taken. If a navigation location history is also recorded in time, one can trace back at where the bad image was taken. Therefore, when survey data collected by a UMV, also the data quality scores calculated from the data, can be traced back, and be associated with a location or a survey area.

Step 208 relates to upon determining that at least one of the data quality scores is lower than a predetermined quality threshold, adjusting a survey characteristic. For example, the travel speed can be adjusted in view of the determined low data quality score. The UMV can also adjust its travel direction (and in the case of ROV/ROTV/AUV also flight height). Adjusting the speed can for example result in increase of resolution or for reducing the blurr in case of low brightness, or just for safety considerations.

Also, adjusting the position of the ROV, e.g. to fly closer to the seabed because of the low data quality score, can result in additional moving slower because the ROV will have less room to react to seabed-obstacles such as boulders, sand dunes, etc.

In a preferred embodiment of step 208, the adjusted survey characteristic relates to adjusting the navigation of the UMV. The resulting adjusting of the navigation will be based on the determined low data quality score. When a data quality score is calculated, and it is lower than a predetermined quality threshold which is set to indicate a minimal quality the survey project requires, the navigation of the UMV can be adjusted to address the low data quality score. As the data score is associated with a survey area, the adjustment can be allowing extra data collection with respect to the survey area associated with the too-low score.

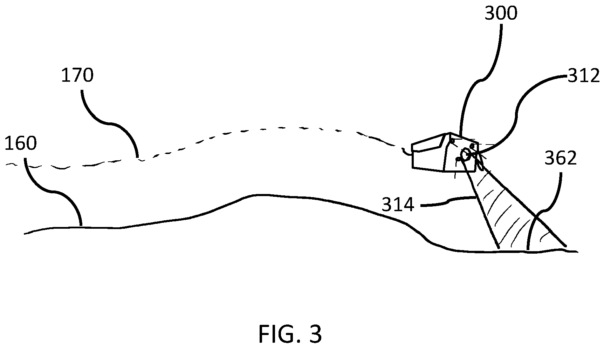

For example, in the video example, if a seabed image acquired by the ROV 100 has a brightness which does not meet the minimal brightness level desired, for example due to the fact that ROV 100 is slowly drifting upward away from the seabed 160, in this case, the adjustment of the navigation can applied to lower the position for the ROV 100 so that the ROV 100 at a proper distance from the seabed at which the image acquired has a proper level of brightness above a threshold. This way, the method allows the UMV to adjust the navigation, in other words adjust the navigation path of the UMV to ensure the quality of the survey data. One example of such adaptive navigation is shown in FIG. 3.

In FIG. 3, an ROV 300 (an umbilical and a surface vessel are not illustrated) is surveying a seabed 160, obtaining surface information/features using a camera 312. The camera 312 has a field of view 314 and facing the seabed 160. In the moment illustrated in FIG. 3, the ROV 300 is acquiring an image of an area 362. In this example, the survey project requires a clear and bright image of the seabed illuminated by lamps installed in the ROV 300. If the ROV 300 gets too close to the seabed, the image can become too bright, blurring the detailed surface features. If the ROV 300 gets too far away from the seabed, the image can become too dark to capture the features of the sea floor. By using the step 208, the ROV's navigation path can be adjusted while navigating to ensure a certain level of quality of acquired images. The result of the adapted navigation path is shown with the reference number 170 in FIG. 3. An original path designated to the ROV 300 may be a horizontal straight line above the seabed 160, but if the original straight path is followed, quality of image cannot be guaranteed especially when the seabed is not flat as shown in FIG. 3. Therefore, the adapted navigation path 170 exhibits a curve along which the acquired images are ensured to have a certain level of quality.

The method can include a preprogrammed navigation trajectory for the UMV. As a result of determining the low quality score associated with one survey area, the UMV starts to deviate navigation from the preprogrammed navigation trajectory. The deviation can include a revisit of a location already visited. In embodiments, the deviation can be collecting data of that survey area from a different location.

The invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

## Claims

1. A method for navigating at least one uncrewed marine vehicle (UMV) to survey a maritime area, the method comprising the steps of:
- deploying the at least one UMV to the maritime area;
- navigating the at least one UMV in the maritime area while collecting a stream of survey data associated with a plurality of survey areas;
- processing the stream of collected survey data to generate data quality scores, wherein the data quality score is associated with at least one survey area; and
- upon determining that the data quality score associated with the at least one survey area is lower than a predetermined quality threshold, adjusting a survey characteristic.

2. The method of claim 1, wherein the adjusting further comprises adjusting the navigation of the UMV based on the determined low data quality score.

3. The method of any of the preceding claims, wherein the method further comprises at least one or any combination of the steps of:
- collecting additional survey data of the survey area associated with the determined low data quality score and updating the at least one data quality score associated with the survey area based on the additional survey data,
- navigating the at least one UMV in the maritime area along a set navigation trajectory, and adjusting the navigation of the UMV in view of the determined low data quality score to deviate from the set navigation trajectory,
- adjusting the navigation of the UMV in view of the determined low data quality to revisit the survey area associated with the determined low data quality,
- providing a plurality of locations within the maritime area for data collection,
- determining a survey path within the maritime area for navigation of the at least one UMV along the plurality of locations,
- navigating the at least one UMV along the survey path,
- collecting the stream of survey data associated with the plurality of locations,
- revisiting at least one survey area or one of the plurality of locations associated with a data quality score that is lower than a second predetermined quality threshold, which is lower than the predetermined quality threshold; and collecting additional survey data from the at least one survey area associated with the data quality score that is lower than the second predetermined quality threshold.

4. The method of any of the preceding claims, wherein the method comprises generating the data quality score associated with the survey area after collecting a full set of survey data of the survey area or after collecting data from the plurality of survey areas.

5. The method of any of the preceding claims, wherein the deploying comprises deploying an uncrewed surface vessel (USV).

6. The method of any of the proceeding claims, wherein the deploying comprises deploying a remotely operated vehicle (ROV), wherein the ROV is connected to a surface vessel.

7. The method of claim 6, wherein the method further comprises the step of:
- navigating the surface vessel in view of the navigation of the ROV.

8. The method of any of the preceding claims, wherein the processing comprises generating the data quality scores using an algorithm having input parameters including at least one of:
- resolution,
- sensor sensitivity,
- field of view,
- signal-to-noise ratio,
- data density,
- data coverage
- survey location,
- signal strength, or
- sensor performance.

9. The method of any of the preceding claims, wherein the adjusting comprises navigating further in view of a current navigational environment.

10. The method of any of the preceding claims, wherein the method further comprises the steps of:
- taking over the navigation of the at least one UMV by a human operator from a land-based station or from any other remote location; and/or
- receiving a navigation path from a human operator from a land-based station or from any other remote location; and/or
- receiving at least one corrected data quality score.

11. The method of any of the preceding claims, wherein the method further comprises the step of:
- updating the predetermined quality threshold in view of a current navigational environment.

12. An uncrewed marine vehicle (UMV) system for surveying a maritime area, the UMV system comprising:
- at least one UMV;
- a memory;
- a processor;
- at least one survey sensor coupled to the at least one UMV, configured to collect a stream of survey data associated with a plurality of survey areas;
- a data scoring unit configured to process the stream of collected survey data to generate data quality scores, wherein the data quality score is associated with at least one survey area; and
- a navigation unit configured to navigate the at least one UMV in the maritime area a navigation path to survey the survey areas,
wherein the navigation unit is configured to, upon determining that at least one of the data quality scores is lower than a predetermined quality threshold, adjust the navigation path of the UMV in view the determined low data quality score.

13. The uncrewed marine vehicle (UMV) system of claim 12, wherein the navigation unit is further configured to navigate the at least one UMV to navigate to the at least one survey area associated with a data quality score that is lower than a second predetermined quality threshold, which is lower than the predetermined quality threshold.

14. The uncrewed marine vehicle (UMV) system of any of claims 12-13, wherein the at least one UMV comprises an assembly of an uncrewed surface vessel and a remotely operated vehicle.

15. The uncrewed marine vehicle (UMV) system of any of claims 12-14, wherein the UMV system further comprises a wireless communication device configured to receive a navigation path and/or at least one corrected data quality score.
